Europäisches Patentamt

European Patent Office

Office européen des brevets

(19)

(11) **EP 0 841 623 A2**

(12) **EUROPEAN PATENT APPLICATION**

(43) Date of publication:
**13.05.1998  Bulletin 1998/20**

(51) Int Cl.⁶: **G06F 17/21**

(21) Application number: **97308676.2**

(22) Date of filing: **30.10.1997**

(84) Designated Contracting States:
**AT BE CH DE DK ES FI FR GB GR IE IT LI LU MC NL PT SE**
Designated Extension States:
**AL LT LV RO SI**

(30) Priority: **06.11.1996  GB 9623047**

(71) Applicant: **NCR INTERNATIONAL INC.**
**Dayton, Ohio 45479 (US)**

(72) Inventor: **Reed, Dominick**
**Spondon, Derby DE21 7TF (GB)**

(74) Representative: **Irish, Vivien Elizabeth**
**International IP Department,**
**NCR Limited,**
**206 Marylebone Road**
**London NW1 6LY (GB)**

(54) **Method and system for processing a string of characters**

(57)     An original string of characters is obtained by a document reader and processed by inserting a blank space (31) between adjacent characters of the original string to produce the processed string (8). The processed string is then displayed to enable a user to edit the processed string of characters and thereby edit the data content of the original string of characters. If the user adds a new character in a blank space, further blank spaces are automatically added at each side. If a user deletes a character, an adjacent blank space is automatically deleted.

# FIG. 4

EP 0 841 623 A2

## Description

The present invention relates to strings of characters obtained by a document reader, and is particularly directed to a method of processing such strings of alphanumeric characters and presenting the processed strings of characters on a display screen of a monitor to enable an operator to edit the strings of characters.

A number of ways to edit strings of characters appearing on a display screen of a monitor are known. A string of characters may need to be edited to make a correction to the string of characters. One way to edit an incorrect string of characters is to re-type the entire string of characters. However, this may be tedious, especially if the string of characters to be corrected is relatively long and needs only a minor correction. Another way to edit an incorrect string of characters is to position a cursor appearing on the display screen and then press a combination of the backspace, delete, and insert keys on a keyboard. However, this may cause confusion for an operator who is unfamiliar with the use of the backspace, delete, and insert keys on a keyboard. For example, there may be confusion as to which character will be deleted when the cursor is positioned between two characters and the delete key is pressed.

According to the invention a method of processing an original string of characters obtained by a document reader and displaying the processed string of characters to enable editing of the original string characterized by inserting an editable space between adjacent characters of the original string to produce a processed string of characters.

According to another aspect of the present invention a system for processing an original string of characters obtained by a document reader and display the processed string of characters to enable editing of the original the system comprising a display unit; and a processing unit, characterized in that the processing unit includes means for inserting an editable space between adjacent characters of the original string to produce the processed string.

The invention will be described by way of example with reference to the accompanying drawings, wherein:

Fig. 1 is a perspective view of a system embodying the present invention;

Fig. 2 is a sectional view, taken approximately along line 2-2 of Fig. 1, showing a touch-sensitive screen overlying a display screen of a monitor;

Fig. 3 is block diagram representation of a processing unit used in the display system of Figs. 1 and 2;

Fig. 4 is a flowchart depicting operation of the system of Figs. 1 and 2 in accordance with the present invention;

Fig. 5 is an enlarged view of a cursor and a target area on the display screen of the monitor of the system of Figs. 1 and 2;

Fig. 6 is a view similar to Fig. 5 and showing a finger touching that portion of the touch-sensitive screen which overlies the target area on the display screen;

Fig. 7 is a view similar to Fig. 6 and showing the finger, the target area, and the cursor in another position;

Fig. 8. is a flowchart depicting operation of the cursor of Figs. 5-7; and

Fig. 9 is another flowchart depicting operation of the system of Figs. 1 and 2 in accordance with the present invention.

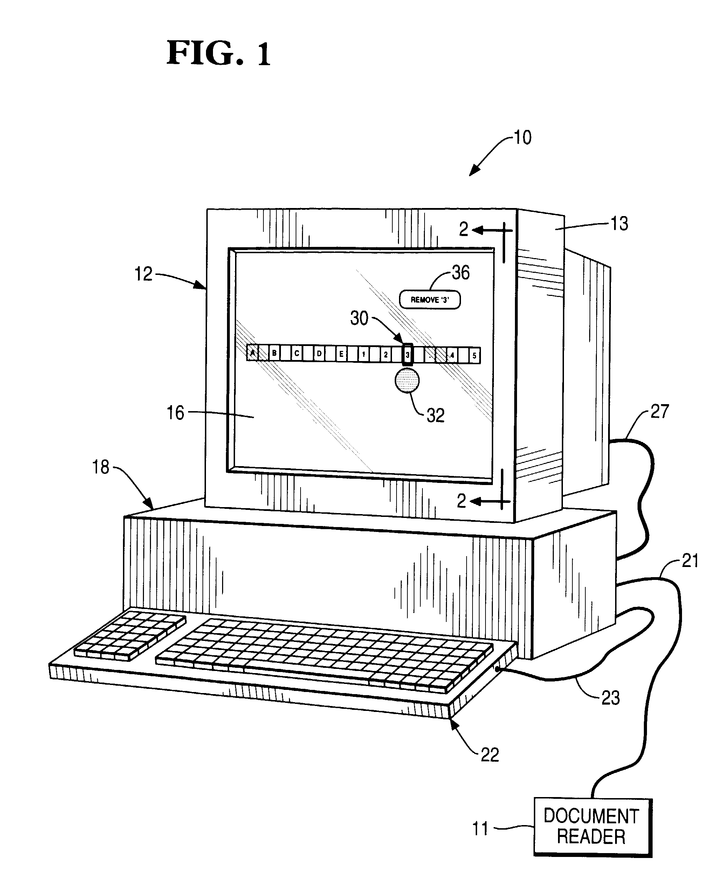

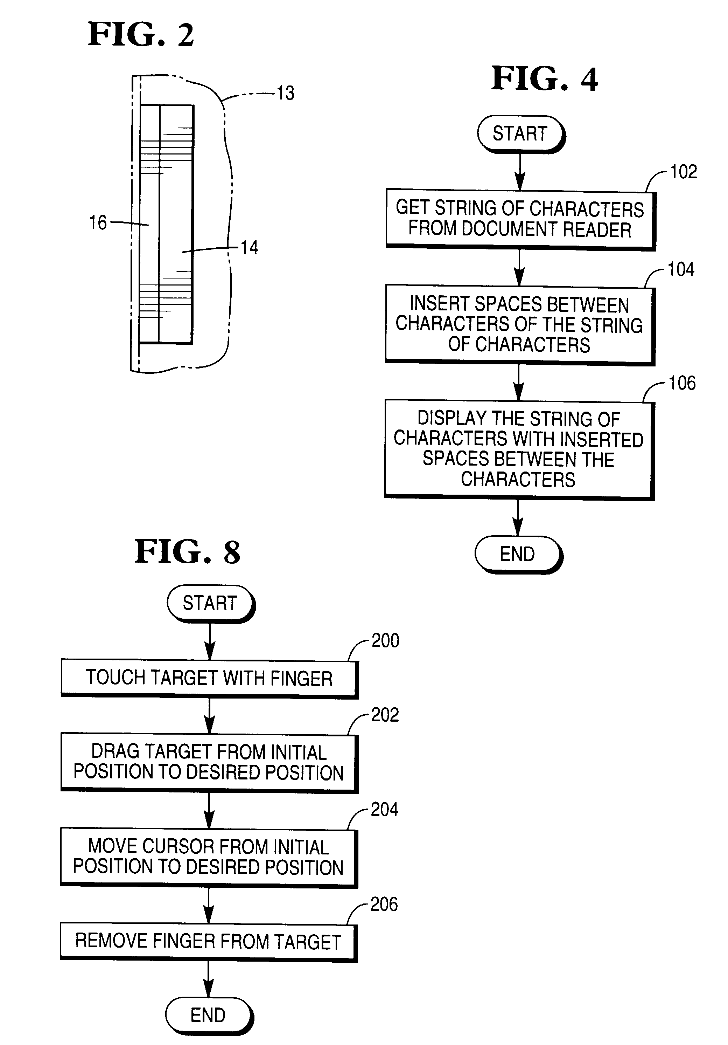

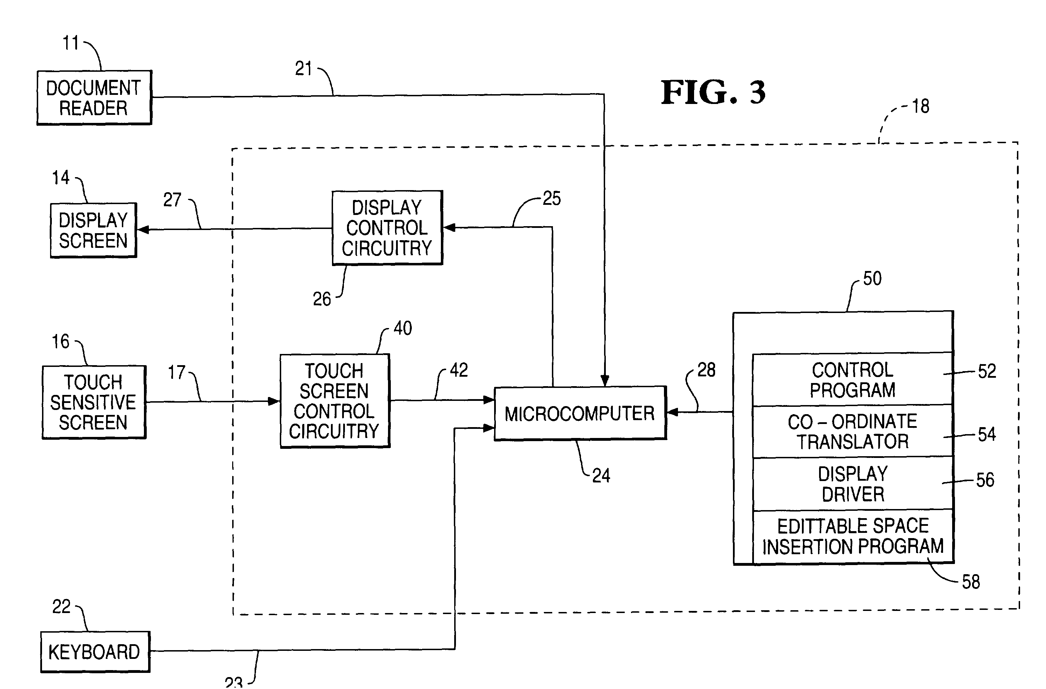

A system 10 embodying the present invention includes a document reader 11 and a monitor 12 enclosed in a monitor housing 13, as shown in Figs. 1 and 2. The system 10 further includes a processing unit 18 which is electrically connected through a cable 27 to the monitor 12 and through a cable 21 to the document reader 11. A keyboard 22 is electrically connected through cable 23 to the processing unit 18. The monitor 12 has a display screen 14 and a touch-sensitive screen 16 overlying the display screen 14, as shown in Fig. 2. The touch-sensitive screen 16 may be of the type which uses capacitive current to provide an output signal indicative of the location at which the touch-sensitive screen 16 is being touched. An image of a cursor 30 and an image of a target area 32 which is separate from the cursor 30 are displayed on the display screen 14, as shown in Fig. 1, together with a processed string of characters 8.. The touch-sensitive screen 16 provides output signals on line 17 (shown only in Fig. 3) to the processing unit 18.

Referring to Fig. 3, the processing unit 18 receives input signals from the document reader 11, the keyboard 22, and the touch-sensitive screen 16 and provides output signals to the display screen 14 in response to the input signals. More specifically, the processing unit 18 includes touch-screen control circuitry 40 which receives input signals on line 17 from the touch-sensitive screen 16 and provides output signals on line 42 in response thereto. The touch-screen control circuitry 40 continually monitors the touch-sensitive screen 16 for sensing any touching or "dragging" event which occurs on the touch-sensitive screen 16. The processing unit 18 further includes a microcomputer 24 and a memory 50 which communicates via signals on line 28 with the microcomputer 24. Suitable microcomputers and memories are readily available in the marketplace. Their structure and operation are well known and, therefore, will not be described.

The microcomputer 24 receives input signals on cable 21 from the document reader 11. The input signals from the document reader 11 comprise strings of alphanumeric characters. The characters in each string of characters are aligned next to each other. The microcomputer 24 processes the input signals from the document reader 11 in accordance with the present invention. More specifically, the microcomputer 24 processes the input signals from the document reader 11 to create modified strings of characters in accordance with instructions of a main control program 52 and an editable space insertion program 58, both of which are stored in the memory 50.

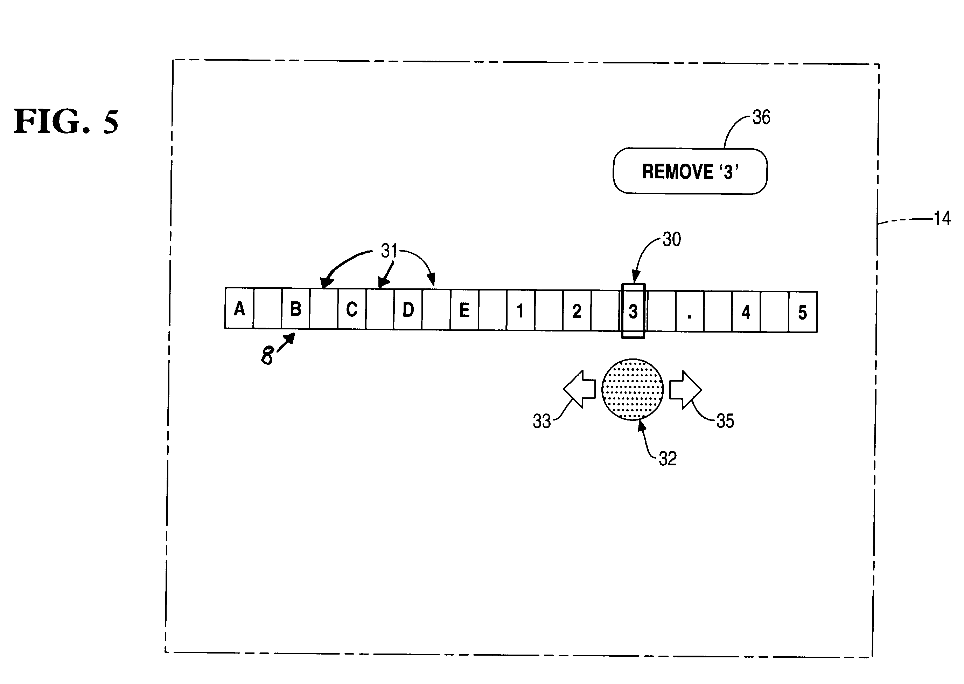

Referring to Fig. 4, a flowchart depicts operation of the program 58 to create modified strings of characters in accordance with the present invention. As shown in step 102 of Fig. 4, the microcomputer 24 obtains an original string of characters from the document reader 11. The program 58 then proceeds to step 104 in which a single editable space (reference 31 in Fig.5) is inserted between each pair of characters in the original string of characters obtained in step 102. When a single editable space 31 is inserted between each pair of characters, a modified string 8 of characters is created. The modified string of characters containing the inserted spaces is displayed on the display screen 14, as shown in step 106.

The microcomputer 24 also receives input signals on cable 23 from the keyboard 22 and input signals on line 42 from the touch-screen control circuitry 40, and processes these input signals in accordance with instructions of the main control program 52 stored in the memory 50. The microcomputer 24 processes its input signals and generates output signals in accordance with instructions of a co-ordinate translator 54 stored in the memory 50. The microcomputer 24 then provides the output signals on line 25 to display control circuitry 26 in accordance with instructions of a display driver 56 stored in the memory 50. The display control circuitry 26 provides output signals on line 27 to the display screen 14 to be displayed. The structure and operation of the display control circuitry 26 are well known and, therefore, will not be described.

In known touch-screen systems, input signals from a touch-sensitive screen are first translated into co-ordinates of an internal co-ordinate system. The internal co-ordinates are then linearly transformed into display co-ordinates. The linear transformation of internal co-ordinates to display co-ordinates may be mathematically represented as:

$$xb = a(xa) + b(ya) + c$$

$$yb = d(xa) + e(ya) + f$$

where
(xa, ya) are the internal co-ordinates
(xb, yb) are the display co-ordinates
(a, b, c, d, e, f) are parameters

In the known touch-screen systems, the system is calibrated and the parameters are selected such that the display co-ordinates of the cursor coincide with the location at which the touch-screen is being touched.

The touch-screen system is calibrated and the parameters are selected such that the display co-ordinates of the cursor are offset from the location at which the touch-screen is being touched. In particular, the touch-screen control circuitry 40 linearly transforms internal co-ordinates into display co-ordinates in a manner which enables the cursor 30 and the target area 32 to be separate from each other on the display screen 14, as explained in more detail hereinbelow.

Referring to Fig. 5, the image of the cursor 30 appearing on the display screen 14 of the monitor 12 is movable along an image of a text string 8 which also appears on the display screen 14. The text string 8 lies along a horizontally extending linear axis on the display screen 14. As shown in Fig. 5, the numeral "3" is being selected by the cursor 30. An image of the target area 32 also appears on the display screen 14. The target area 32 is located below the cursor 30 on the display screen 14. The cursor 30 and the target area 32 are separate from each other. The target area 32 is movable in opposite directions (as shown with arrows 33 and 35 in Fig. 5) along a linear axis on the display screen 14 which is parallel to the linear axis of the text string 31.

Also, as shown in Fig. 5, an image of a "REMOVE" key 36 appears in the vicinity of the upper right corner of the display screen 14. The image of the REMOVE key 36 includes the particular character which the cursor 30 is presently selecting. Since the cursor 30 shown in Fig. 5 is selecting the numeral "3", the image of the REMOVE key 36 includes the numeral "3".

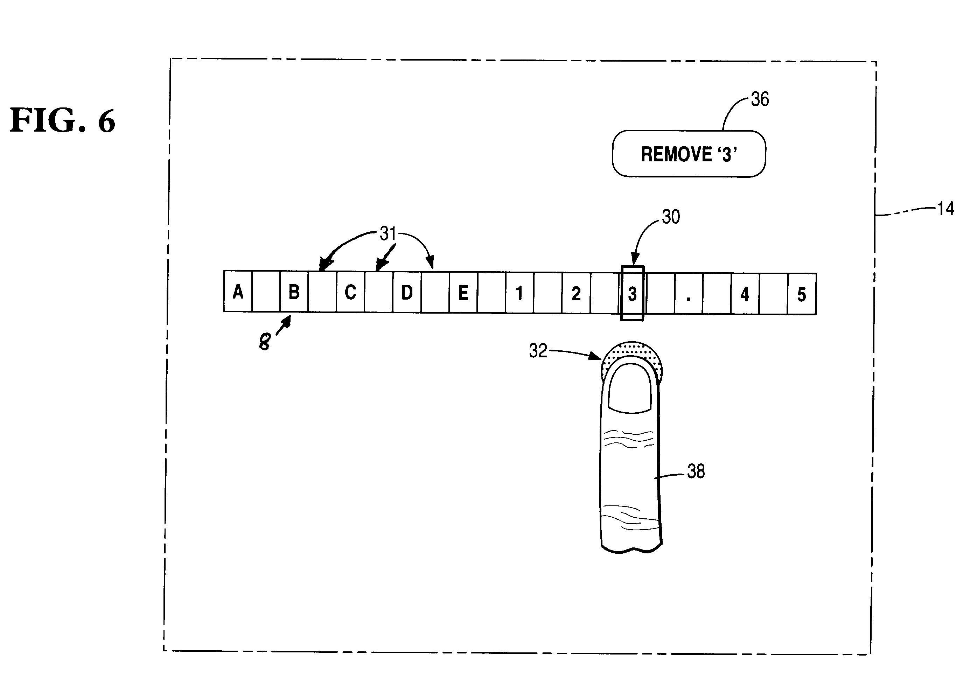

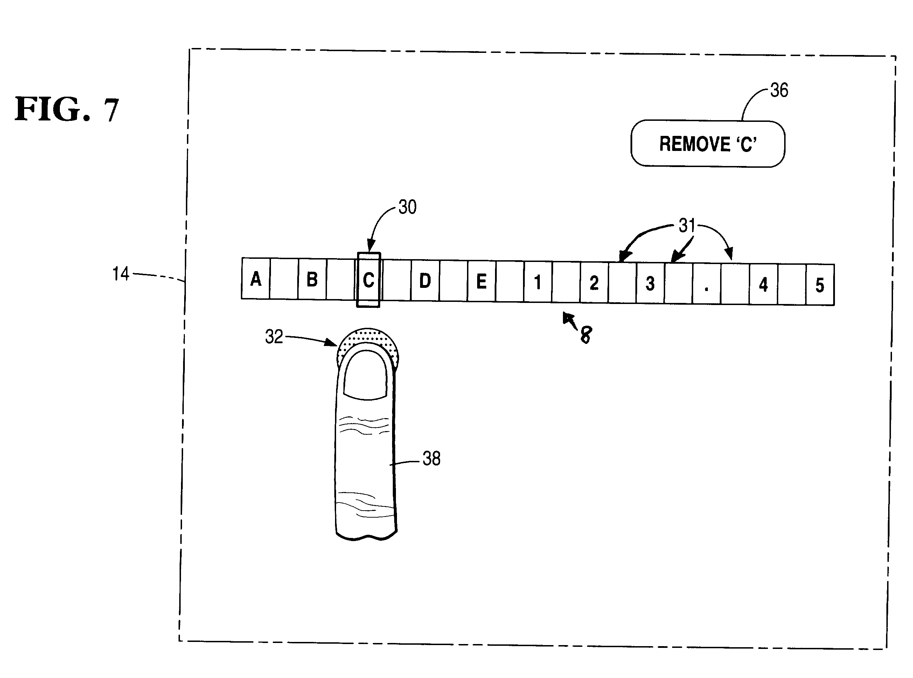

To move the cursor 30 from one position to another position on the display screen 14, a finger 38 (Fig. 6) of a user is placed on the surface of the touch-sensitive screen 16 in the vicinity of the target area 32. The finger 38 generally covers the entire target area 32. After the finger 38 is placed on the touch-sensitive screen 14 at the initial location such as shown in Fig. 6, the finger 38 is moved across the touch-sensitive screen 16 to another location on the touch-sensitive screen 16 such as shown in Fig. 7. The finger 38 remains in contact with the surface of the touch-sensitive screen 16 during movement of the finger 38 from the position shown in Fig. 6 to the position shown in Fig. 7.

When the finger 38 is moved from the position shown in Fig. 6 to the position shown in Fig. 7, the target area 32 is "dragged" from its initial position shown in Fig. 6 to the position shown in Fig. 7. In response to the target area 32 being dragged from the position shown in Fig. 6 to the position shown in Fig. 7, the cursor 30 located above the target area 32 is dragged from its position shown in Fig. 6 to the position shown in Fig. 7. As shown in Fig. 7, the letter "C" is being selected by the cursor 30. Since the cursor 30 shown in Fig. 7 is selecting the alphabetic character "C", the image of the REMOVE key 36 includes the alphabetic character "C".

With reference to the above-identified pair of linear transformation equations and the above-described movement of the cursor 30 and the target area 32 with reference to Figs. 5-7, it should be apparent that the transformation comprises only vertical translation which is represented by the parameter "f". Since there is no horizontal translation, the parameter "c" is zero. Also, since there is no rotational translation, the parameters "b" and "d" are zero. There is no scaling in the movement of the cursor 30 and the target area 32 as shown in Figs. 5-7. Since there is no scaling, the parameters "a" and "d" each have a value of one.

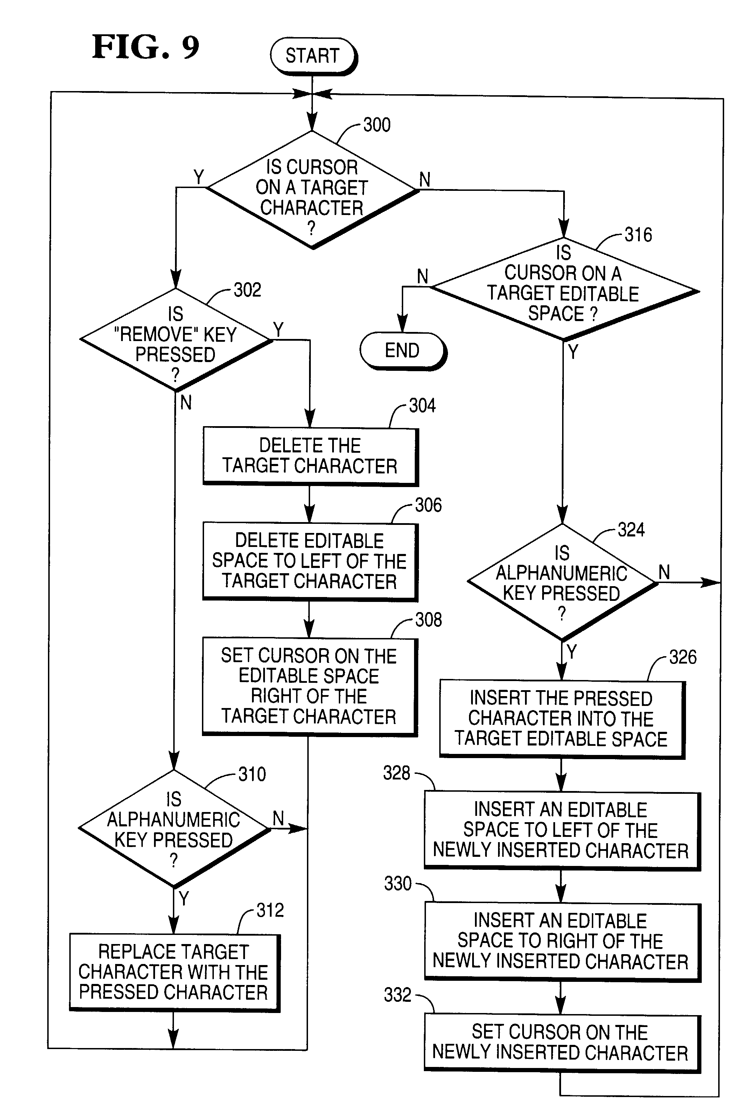

Referring to Fig. 8, a flowchart depicts operation of the cursor 30 just described hereinabove. As shown in step 200, the user's finger 38 is applied to the target area 32. The finger 38 is then moved to another position to drag the target area 32 from the position in Fig. 6 to the position shown in Fig. 7, as shown in step 202 of Fig. 8. When this occurs, the cursor 30 is dragged from the position in Fig. 6 to the position in Fig. 7, as shown in step 204 of Fig. 8. The user's finger 38 is then removed from the target area 32 as shown in step 206 in Fig. 8.

A number of advantages result by moving the cursor 30 as described hereinabove. One advantage is that the desired target selection is not obscured by the finger 38 of user when the cursor 30 arrives at the location of the desired target location. Another advantage is that the cursor 30 is positioned quickly and accurately on the desired target selection when the cursor 30 arrives at the location of the desired target selection.

Referring to Fig. 9, a flowchart depicts operation of the editable space insertion program 58 stored in the memory 50 to manage the number of editable spaces in the modified string of characters when either a new character is added or an existing character is deleted. In step 300, a determination is made as to whether the cursor 30 is on a target alphanumeric character (including commas, periods, decimal points, etc.). If the determination in step 300 is affirmative, the program proceeds to step 302 in which a determination is made as to whether the image of the REMOVE key 36 on the display screen 14 is touched.

If the REMOVE key 36 is pressed, as determined in step 302, the program proceeds to step 304 in which the target alphanumeric character is deleted. The program then proceeds to step 306 in which the editable space immediately to the left of the just deleted target character is also deleted. The cursor 30 is then placed on the editable space which is immediately to the right of the just deleted target character as shown in step 308. The program then returns to the start.

However, if the REMOVE key 36 is not pressed, as determined in step 302, the program proceeds to step 310 in which a determination is made as to whether an alphanumeric character key on the keyboard 22 is pressed. If the determination in step 310 is negative, the program returns to the start. Otherwise, the program proceeds to step 312 to replace the target character with the newly pressed alphanumeric character before returning to the start.

If the determination in step 300 is negative, the program proceeds to step 316 in which a determination is made as to whether the cursor 30 is on a target editable space 31. If the determination in step 316 is negative, the program ends. Otherwise, the program proceeds to step 318 in which a determination is made as to whether the insert key on the keyboard 22 is pressed. If the determination in step 318 is affirmative, the program returns to the start. If the determination in step 318 is negative, the program proceeds to step 324.

In step 324, a determination is made as to whether an alphanumeric key on the keyboard 22 is pressed. If the determination in step 324 is negative, the program returns to the start. Otherwise, the program proceeds to step 326 in which the just pressed alphanumeric character is inserted into the target editable space 31. An editable space is then inserted to the left of the newly inserted character, as shown in step 328. Another editable space is inserted to the right of the newly inserted character, as shown in step 330. Also, as shown in step 332, the cursor 30 is set on the newly inserted character of step 326 before the program returns to the start.

A number of advantages result by providing an editable space between adjacent alphanumeric characters, as described hereinabove. One advantage is that a user can easily edit a string of alphanumeric characters without having to re-type the entire string of characters. Another advantage is that a user unfamiliar with the use of the backspace, delete, and insert keys on a keyboard is less likely to be confused as to which alphanumeric character will be deleted when the cursor 30 is positioned between two adjacent characters.

## Claims

1. A method of processing an original string of characters obtained by a document reader and displaying the processed string of characters to enable editing of the original string characterized by inserting (104) an editable space between adjacent characters of the original string to produce a processed string of characters.

2. A method according to claim 1 in which the editable space is a blank space.

3. A method according to claim 1 or claim 2 further comprising the steps of editing an editable space in the processed string to form an additional character (316, 324, 326) and automatically providing additional editable spaces adjacent the additional character (328, 330).

4. A method according to any preceding claim further comprising the steps of deleting a character (302, 304) in the processed string, and automatically deleting (306) adjacent editable space.

5. A system (10) for processing an original string of characters obtained by a document reader (11) and displaying the processed string of characters to enable editing of the original string, the system comprising a display unit (12); and a processing unit (18), characterized in that the processing unit includes means (24, 50) for inserting an editable space (31) between adjacent characters of the original string to produce the processed string (8).

6. A system according to claim 5, further comprising touch screen input means (16, 40) to enable a user to edit the processed string.

# FIG. 1

Labels in figure: 10, 13, 12, 36 (REMOVE '3'), 30, 32, 16, 18, 27, 21, 23, 22, 11 (DOCUMENT READER), 2, 2

A B C D E 1 2 3 X X 4 5

# FIG. 2

16 —

— 13

— 14

# FIG. 4

START

GET STRING OF CHARACTERS FROM DOCUMENT READER — 102

INSERT SPACES BETWEEN CHARACTERS OF THE STRING OF CHARACTERS — 104

DISPLAY THE STRING OF CHARACTERS WITH INSERTED SPACES BETWEEN THE CHARACTERS — 106

END

# FIG. 8

START

TOUCH TARGET WITH FINGER — 200

DRAG TARGET FROM INITIAL POSITION TO DESIRED POSITION — 202

MOVE CURSOR FROM INITIAL POSITION TO DESIRED POSITION — 204

REMOVE FINGER FROM TARGET — 206

END

**FIG. 3**

DOCUMENT READER — 11

21

18

DISPLAY SCREEN — 14

27

DISPLAY CONTROL CIRCUITRY

26

25

TOUCH SENSITIVE SCREEN — 16

17

TOUCH SCREEN CONTROL CIRCUITRY — 40

42

MICROCOMPUTER — 24

28

50

CONTROL PROGRAM — 52

CO – ORDINATE TRANSLATOR — 54

DISPLAY DRIVER — 56

EDITTABLE SPACE INSERTION PROGRAM

58

KEYBOARD — 22

23

EP 0 841 623 A2

8

EP 0 841 623 A2

**FIG. 5**

# FIG. 6

REMOVE '3'

A B C D E 1 2 3 . 4 5

EP 0 841 623 A2

FIG. 7

REMOVE 'C'   36

30

31

14

A B C D E 1 2 3 . 4 5

8

32

38

## FIG. 9

START

IS CURSOR ON A TARGET CHARACTER ? — 300

Y → N

IS "REMOVE" KEY PRESSED ? — 302

IS CURSOR ON A TARGET EDITABLE SPACE ? — 316

N → END

Y

N

Y

DELETE THE TARGET CHARACTER — 304

DELETE EDITABLE SPACE TO LEFT OF THE TARGET CHARACTER — 306

SET CURSOR ON THE EDITABLE SPACE RIGHT OF THE TARGET CHARACTER — 308

IS ALPHANUMERIC KEY PRESSED ? — 310

N →

Y

REPLACE TARGET CHARACTER WITH THE PRESSED CHARACTER — 312

IS ALPHANUMERIC KEY PRESSED ? — 324

N →

Y

INSERT THE PRESSED CHARACTER INTO THE TARGET EDITABLE SPACE — 326

328 — INSERT AN EDITABLE SPACE TO LEFT OF THE NEWLY INSERTED CHARACTER

330 — INSERT AN EDITABLE SPACE TO RIGHT OF THE NEWLY INSERTED CHARACTER

332 — SET CURSOR ON THE NEWLY INSERTED CHARACTER